# EUROPEAN PATENT APPLICATION

(11) **EP 4 300 138 A1**
(43) Date of publication of application: **03.01.2024**
(21) Application number: 23163436.1
(22) Date of filing: 22.03.2023
(51) Int. Cl.: G01S 19/21

(54) **DETERMINATION DEVICE, DETERMINATION METHOD, AND DETERMINATION PROGRAM**

(30) Priority: 28.06.2022 JP 2022103468
(71) Applicant: FUJITSU LIMITED, Kawasaki-shi, Kanagawa 211-8588 (JP)
(72) Inventor: SATO, Shun, Kawasaki-shi, Kanagawa, 211-8588 (JP); FUJISHIMA, Yuki, Kawasaki-shi, Kanagawa, 211-8588 (JP); TORII, Satoru, Kawasaki-shi, Kanagawa, 211-8588 (JP)
(74) Representative: Hoffmann Eitle

(57) **Abstract**

A determination device includes an acquisition unit (10) configured to acquire a ranging signal received by a receiver (104), a first determination unit (40) configured to determine whether the ranging signal has been redundantly received based on information about a positioning satellite that has transmitted the ranging signal and information about a transmission time of the ranging signal, which are included in the ranging signal, and a second determination unit (70) configured to determine that the ranging signal is a spoofing signal when the first determination unit (40) determines that the ranging signal has been redundantly received.

## Description

### FIELD

A certain aspect of embodiments described herein relates to a determination device, a determination method, and a determination program.

### BACKGROUND

Currently, positioning technologies such as GNSS are widely used as an important social infrastructure for navigation of automobiles, ships, aircrafts, and the like. Attacks such as spoofing may be performed using spoofing signals against positioning technologies such as GNSS as disclosed in U.S. Publication No. 2016/0282473, Japanese Patent Application Laid-Open No. 2013-529289, U.S. Publication No. 2020/0145831, and Japanese Patent Application Laid-Open No. 2021-503605.

### SUMMARY

However, there may be a case that spoofing signals cannot be detected.

In one aspect, an object of the present disclosure is to provide a determination device, a determination method, and a determination program capable of detecting a spoofing signal.

According to an aspect of the embodiments, there is provided a determination device including: an acquisition unit configured to acquire a ranging signal received by a receiver; a first determination unit configured to determine whether the ranging signal has been redundantly received based on information about a positioning satellite that has transmitted the ranging signal and information about a transmission time of the ranging signal, which are included in the ranging signal; and a second determination unit configured to determine that the ranging signal is a spoofing signal when the first determination unit determines that the ranging signal has been redundantly received.

### BRIEF DESCRIPTION OF DRAWINGS

FIG. 1A and FIG. 1B illustrate calculation of a position.
FIG. 2 illustrates an attack using a spoofing signal.
FIG. 3 illustrates an attack using a spoofing signal.
FIG. 4 illustrates an attack using a spoofing signal.
FIG. 5A and FIG. 5B illustrate an attack using a spoofing signal.
FIG. 6A is a block diagram illustrating an overall configuration of a positioning device in accordance with a first embodiment, and FIG. 6B is a block diagram illustrating a hardware configuration of the positioning device.
FIG. 7A and FIG. 7B are flowcharts illustrating an example of the operation of the positioning device.
FIG. 8 is a diagram illustrating a frame configuration of a ranging signal.
FIG. 9A illustrates ephemeris information included in a sub-frame #2, and FIG. 9B illustrates ephemeris information included in a sub-frame #3.
FIG. 10A illustrates almanac information, and FIG. 10B illustrates data stored in an analysis unit.
FIG. 11A to FIG. 11C illustrate visible satellites.
FIG. 12 illustrates terrain information.

### DESCRIPTION OF EMBODIMENTS

The global navigation satellite system (GNSS) is a system that receives ranging signals having time information from a plurality of positioning satellites and measures the current position on the ground. The global positioning system (GPS) is one type of the GNSS. The GNSS is utilized for automatic driving of passenger cars and snow removers, automatic navigation of drones and ships, automatic traveling of agricultural equipment, marine civil engineering work (positioning of work ships and breakwaters), and the like.

The ranging signal transmitted by the positioning satellite contains, as ephemeris information, information about the positioning satellite (the identification number, the position of the positioning satellite itself, and the like), information about transmission time of the ranging signal, and the like. A positioning device including a receiver calculates a distance between the positioning satellite and the receiver from the difference between the transmission time of the ranging signal and the reception time of the receiver. Specifically, the distance between the positioning satellite and the receiver is calculated by radio wave arrival time × radio wave propagation speed.

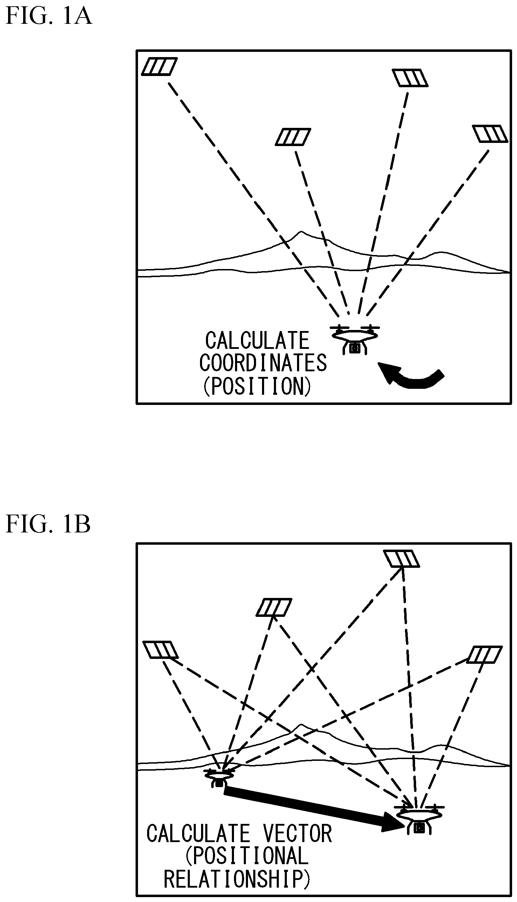

The positioning device calculates its own position using distances between a plurality of positioning satellites and the receiver. For example, as illustrated in FIG. 1A and FIG. 1B, the position of the positioning device can be calculated from the distances between three or more positioning satellites and the receiver using the triangulation method. The accuracy of the clock of the positioning device is not as high as that of the atomic clock of the positioning satellite. When the reception time of the signal is off by 1 microsecond, the error in the distance is about 300 meters. The time of the positioning device can be corrected using the ranging signal of the fourth positioning satellite.

The ranging signal is not encrypted, and there is no authentication process. Since the ranging signal is weak, it cannot be received when there is a strong radio wave with the same frequency. For example, the power of the radio wave transmitted by a positioning satellite at an altitude of about 20,000 kilometers is about the same as a current of 100 watts. By using these properties, an attack such as spoofing or meaconing that disguises the GNSS and gives incorrect position information to the target may be performed.

For example, since the format and contents of the ephemeris information are known, in spoofing, a ranging signal that disguises a ranging signal from a positioning satellite (hereinafter may be referred to as a spoofing signal) is generated. In meaconing, a ranging signal from a positioning satellite is received and recorded, and a part of the received ranging signal is processed to generate a spoofing signal. When a transmitter is used to transmit a spoofing signal to the antenna of the target receiver, the receiver will receive the spoofing signal rather than the ranging signal from the positioning satellite. Thus, an attack that disguises the GNSS and gives incorrect position information to the target is possible.

In the spoofing attack and the meaconing attack, for example, attacks such as (1) guiding a target to an attacker, (2) repelling the target, (3) fraudulently unlocking an electronic lock of the door of a cargo bed, and (4) fraudulently unlocking a screen lock of a mobile terminal may be performed.

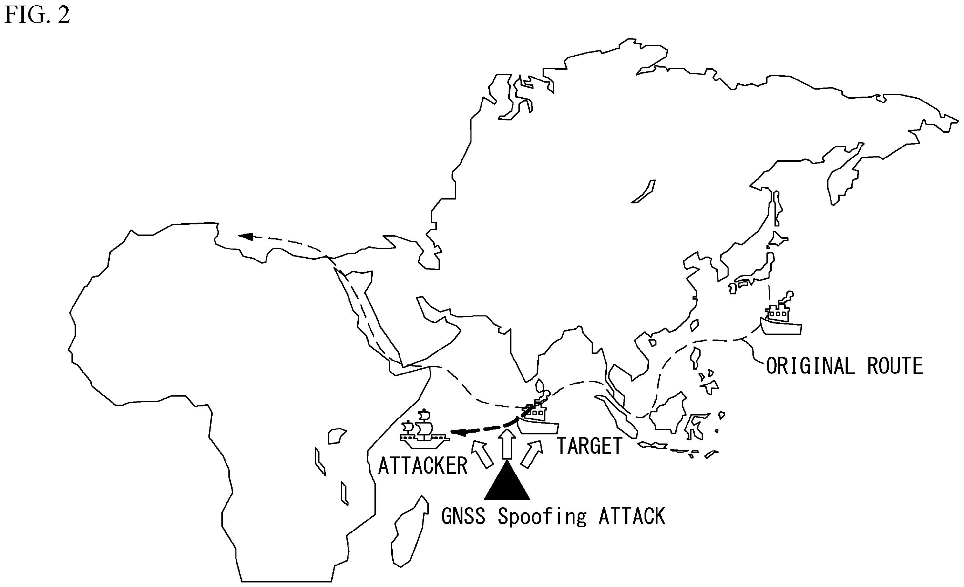

For example, it is conceivable that the route of the ship is fraudulently controlled by the attack (1). In this case, as illustrated in FIG. 2, it is conceivable that an attacker transmits a spoofing signal for guiding the ship to a place advantageous to the attacker for a certain period of time to cause the automatic steering device to control the rudder so that the ship travels toward the set course.

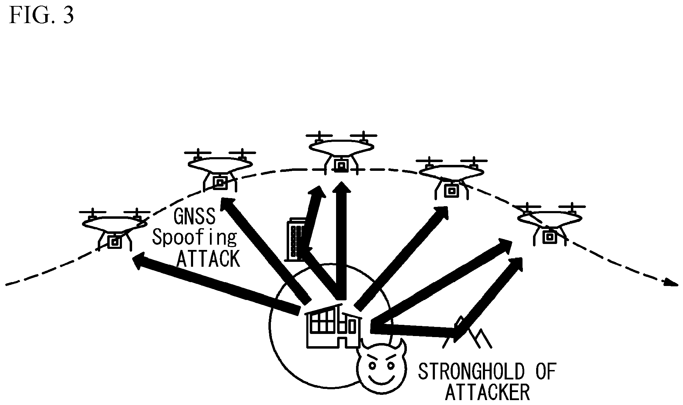

Alternatively, it is conceivable to fraudulently drive away a drone (unmanned aerial vehicle) that flies while automatically avoiding the no-fly zone by the attack (2). In this case, as illustrated in FIG. 3, it is conceivable that an attacker drives away the drone by transmitting a spoofing signal that disguises the position information of the no-fly zone for a certain period of time.

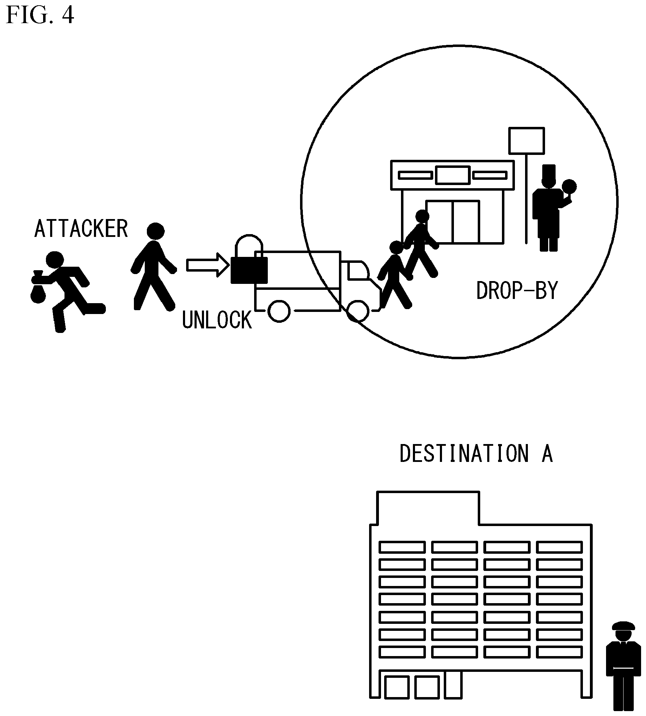

Alternatively, an electronic lock that is to be unlocked when arriving at a position set by the owner in advance may be fraudulently unlocked by the attack (3). In this case, as illustrated in FIG. 4, it is conceivable that an attacker fraudulently unlocks the electronic lock by transmitting a spoofing signal corresponding to the destination from close range only for a moment.

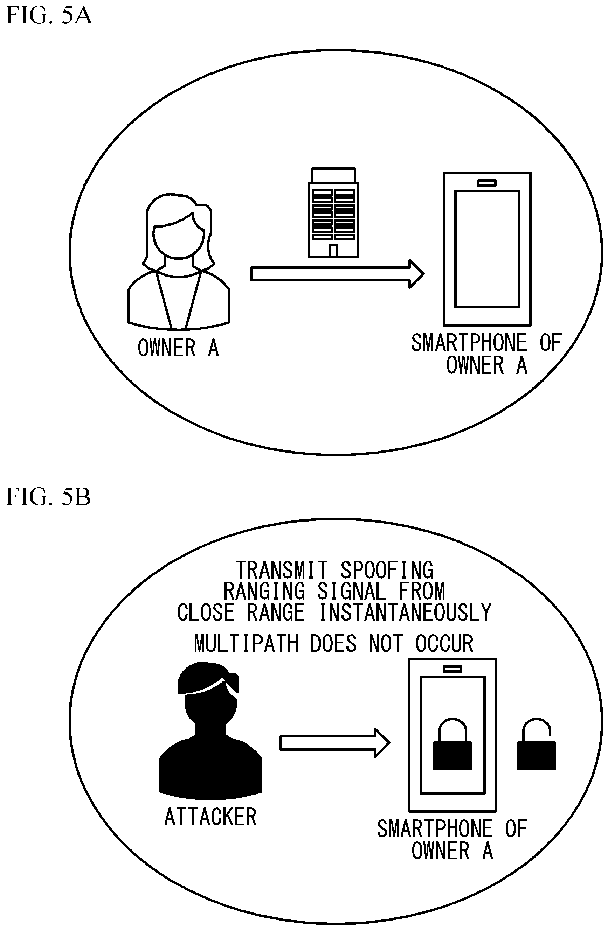

Alternatively, it is conceivable that the screen lock is fraudulently unlocked by the attack (4) in the mobile terminal whose screen lock is unlocked based on the position information set as a reliable place by the owner. For example, as illustrated in FIG. 5A, it is assumed that the owner A sets his/her workplace as a reliable place. In this case, as illustrated in FIG. 5B, it is conceivable that an attacker fraudulently unlocks the lock of the mobile terminal of the owner A by transmitting a spoofing signal corresponding to the workplace of the owner A from close range only for a moment.

Several methods for detecting the attack (1) and the attack (2) are disclosed. For example, in the attack (1) and the attack (2), since a plurality of spoofing signals are transmitted from the same specific position, the paths through which the spoofing signals have been transmitted are the same, and the influences of disturbance on the spoofing signals in the paths are also the same. Therefore, a high correlation appears in the temporal change in the signal intensities of the spoofing signals. By using this fact, for example, a technique is disclosed in which ranging signals are acquired for a certain period of time, the acquired ranging signals are compared with each other, and when the correlation is high, the ranging signal is determined to be a spoofing ranging signal.

However, in the attack (3) and the attack (4), the spoofing signal is transmitted only for a moment, and thus it is difficult to detect the attack (3) and the attack (4) with the above-described technology. Therefore, the inventor conducted a comparative study between the attacks (1) and (2) and the attacks (3) and (4). As a result, the following differences were found.

First, in the attack (1) and the attack (2), the target is often a moving object. An attacker transmits a spoofing signal from a long distance for a certain period of time while changing contents (satellite time and satellite orbit). The radio wave of the spoofing signal is made strong. On the other hand, in the attacks (3) and (4), the target is often a stationary object. An attacker instantaneously transmits a spoofing signal from close range. Only one pattern is required to be prepared for the spoofing signal. The radio wave of the spoofing signal may be weak. As described above, the feature differences described above appear between the attacks (1) and (2) and the attacks (3) and (4).

In addition, when a spoofing signal is transmitted at long range, multipath occurs because of reflection by obstacles such as mountains and buildings and diffraction by hiding objects. Here, the multipath means that two or more signal propagation paths are generated for the same ranging signal. Since there is a difference between the path lengths of these signal propagation paths, ranging signals with the same contents transmitted from the same positioning satellite arrive at the receiver with a time lag. Therefore, if ranging signals having the same contents are detected by the receiver with a time lag, it can be determined that multipath is occurring. In the attack (3) and the attack (4) in which a ranging signal is transmitted at close range, multipath is unlikely to occur.

Therefore, in the following embodiments, an example of detecting the attack (3) and the attack (4) will be described by focusing on the presence or absence of the occurrence of multipath.

Hereinafter, embodiments will be described with reference to the drawings.

### First Embodiment

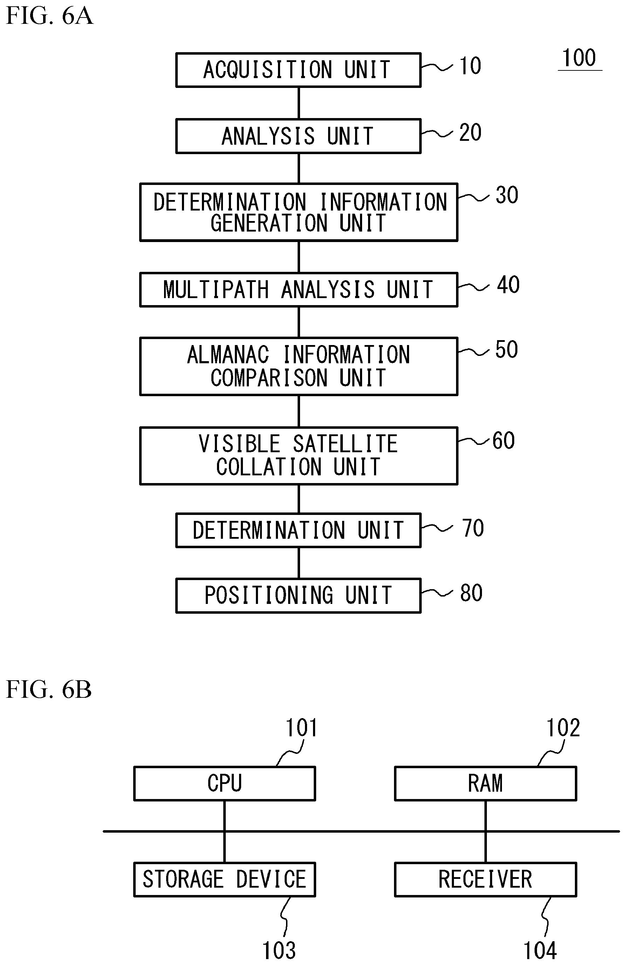

FIG. 6A is a block diagram illustrating an overall configuration of a positioning device 100 in accordance with a first embodiment. As illustrated in FIG. 6A, the positioning device 100 includes an acquisition unit 10, an analysis unit 20, a determination information generation unit 30, a multipath analysis unit 40, an almanac information comparison unit 50, a visible satellite collation unit 60, a determination unit 70, a positioning unit 80, and the like.

FIG. 6B is a block diagram illustrating a hardware configuration of the positioning device 100. As illustrated in FIG. 6B, the positioning device 100 includes a CPU 101, a RAM 102, a storage device 103, a receiver 104, and the like.

The CPU (central processing unit) 101 is a central processing unit. The CPU 101 includes one or more cores. The RAM (random access memory) 102 is a volatile memory that temporarily stores programs to be executed by the CPU 101, data processed by the CPU 101, and the like. The storage device 103 is a nonvolatile storage device. As the storage device 103, for example, a read only memory (ROM), a solid state drive (SSD) such as a flash memory, a hard disk driven by a hard disk drive, or the like can be used. The storage device 103 stores a determination program. The receiver 104 is a receiver that receives a ranging signal from a positioning satellite. When the CPU 101 executes the determination program, the acquisition unit 10, the analysis unit 20, the determination information generation unit 30, the multipath analysis unit 40, the almanac information comparison unit 50, the visible satellite collation unit 60, the determination unit 70, and the positioning unit 80 are implemented. Note that hardware such as dedicated circuits may be used as the acquisition unit 10, the analysis unit 20, the determination information generation unit 30, the multipath analysis unit 40, the almanac information comparison unit 50, the visible satellite collation unit 60, the determination unit 70, and the positioning unit 80.

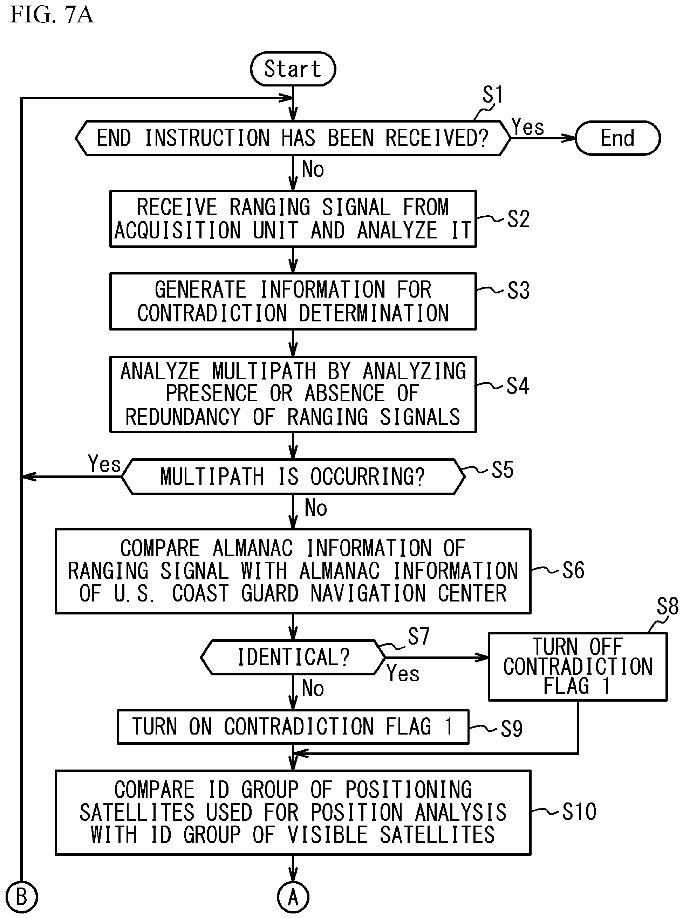

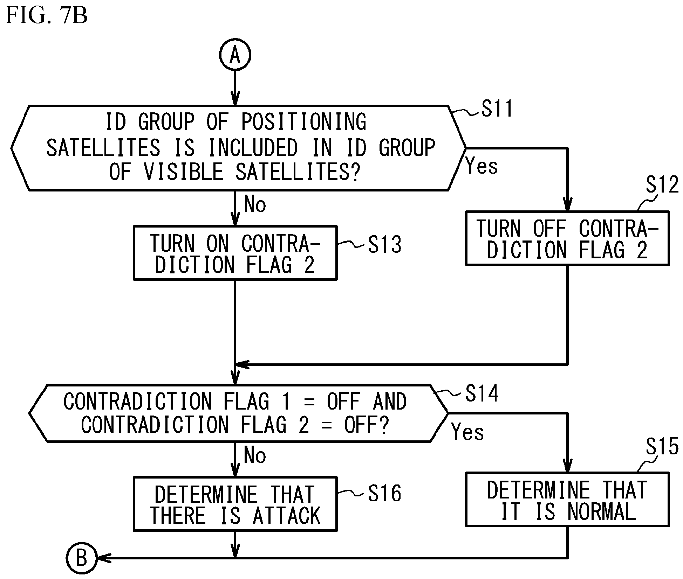

FIG. 7A and FIG. 7B are flowcharts illustrating an example of the operation of the positioning device 100. Hereinafter, an example of the operation of the positioning device 100 will be described with reference to FIG. 7.

The determination unit 70 determines whether an end instruction has been received (step S1). When it is determined to be "Yes" in step S1, the execution of the flowchart ends. Thereafter, the process is executed again from step S1 after a predetermined period of time.

When it is determined to be "No" in step S1, the analysis unit 20 receives the ranging signal from the acquisition unit 10 that has acquired the ranging signal received by the receiver 104, and analyzes the received ranging signal (step S2).

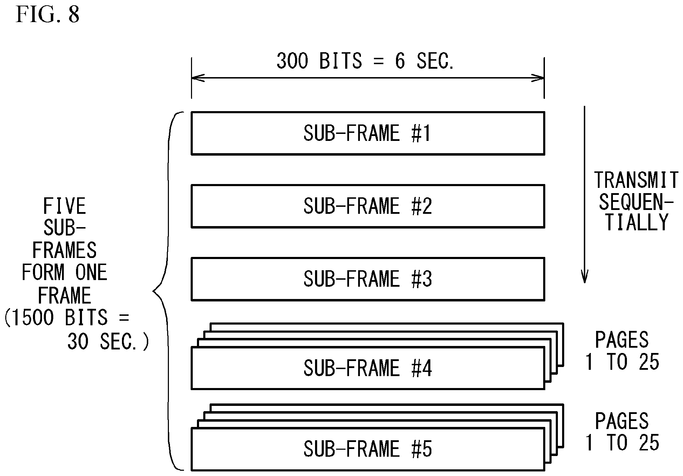

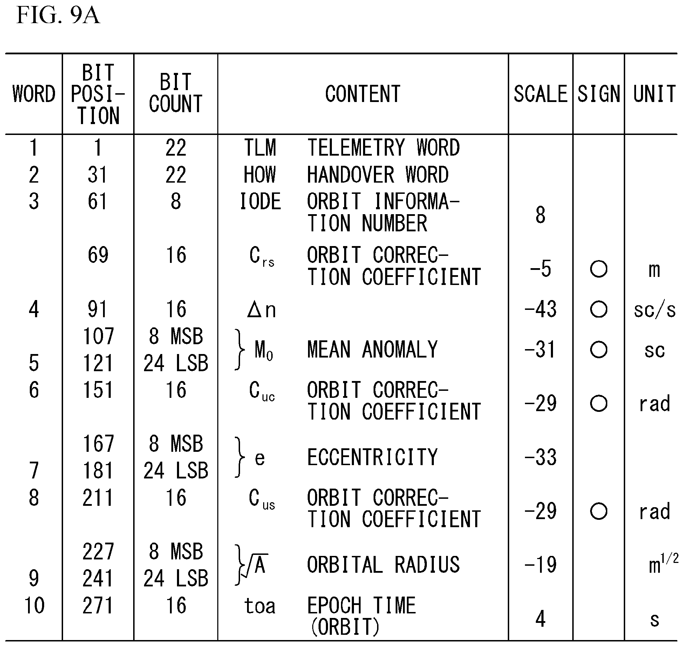

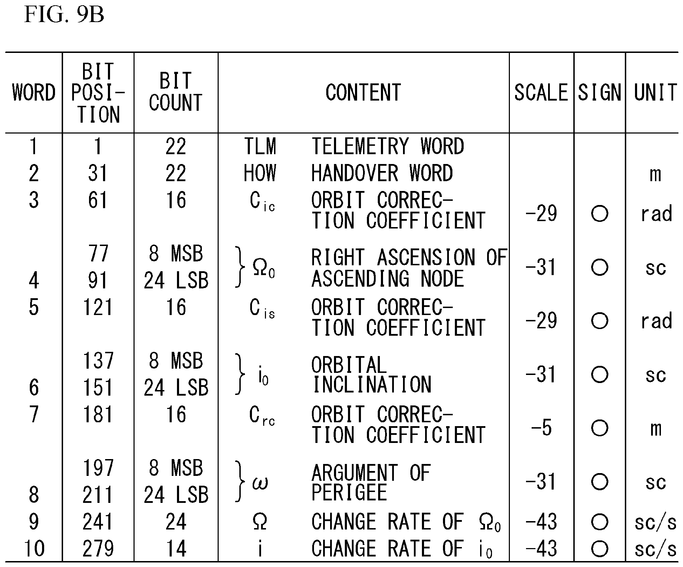

FIG. 8 is a diagram illustrating a frame configuration of a ranging signal. A sub-frame #2 and a sub-frame #3 of the ranging signal include ephemeris information. FIG. 9A illustrates the ephemeris information included in the sub-frame #2. FIG. 9B illustrates the ephemeris information included in the sub-frame #3. The ephemeris information is generated based on six Kepler orbital elements and the influence of perturbation. The validity period is about 90 minutes.

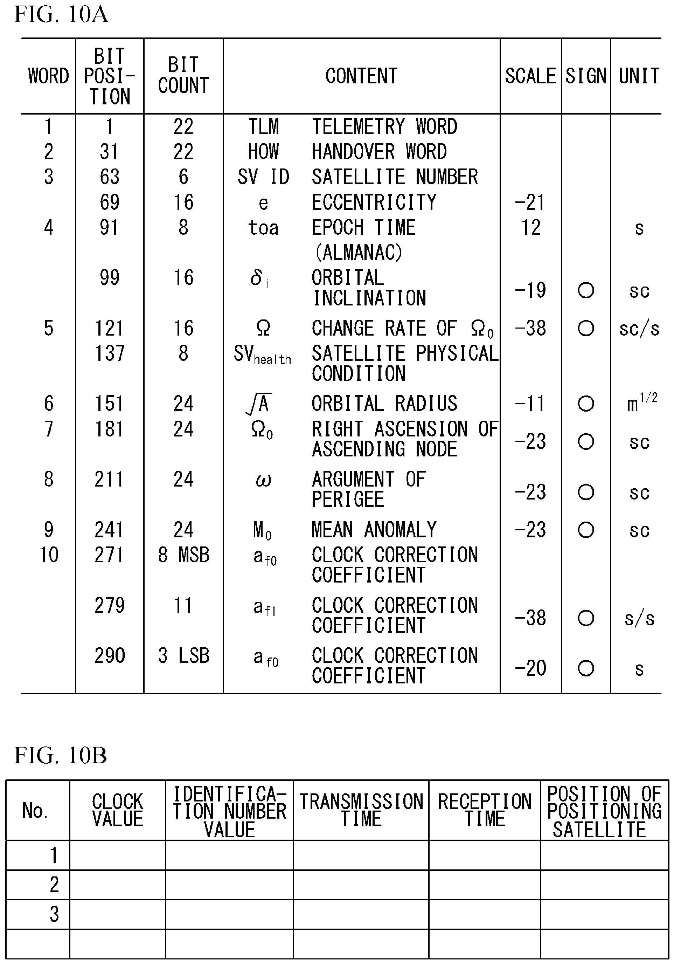

A sub-frame #4 and a sub-frame #5 of the ranging signal include almanac information. FIG. 10A illustrates the almanac information. As illustrated in FIG. 10A, the almanac information is orbit information regarding all positioning satellites. The almanac information is generated based on six Kepler orbital elements. The validity period is about one week.

The analysis unit 20 analyzes the ephemeris information and the almanac information included in the ranging signal received by the acquisition unit 10. As a result of the analysis, the analysis unit 20 acquires the clock value, the identification number value, the transmission time of each of the positioning signals of the respective positioning satellites that have transmitted the positioning signals, the reception time of each of the positioning signals, and the positions of all the positioning satellites, and stores the acquired data. FIG. 10B illustrates data stored in the analysis unit 20.

Then, the determination information generation unit 30 generates information for determining contradiction based on the date stored in the analysis unit 20 (step S3). For example, the determination information generation unit 30 generates position information (latitude, longitude, and altitude) of the positioning device 100 and generates an ID group of positioning satellites used for the position analysis. As the ID group, for example, identification number values are used.

Then, the multipath analysis unit 40 analyzes whether the ranging signals received by the positioning device 100 are redundant based on the date stored in the analysis unit 20 and analyzes the multipath (step S4).

Then, the multipath analysis unit 40 determines whether multipath is occurring (step S5). The multipath analysis unit 40 determines that multipath is occurring when the redundancy of the ranging signals is detected, and determines that no multipath occurs when the redundancy of the ranging signals is not detected. For example, when ranging signals with the same contents are received with a time lag equal to or greater than a predetermined threshold value, the redundancy of the ranging signals is detected. When it is determined that no multipath occurs, the multipath analysis unit 40 determines that an attack using a ranging signal has been performed. In order to determine whether the contents are the same, it is confirmed that all pieces of the ephemeris information and all pieces of the almanac information are identical between the ranging signals, or it is confirmed that specific pieces of the ephemeris information and specific pieces of the almanac information are identical between the ranging signals, or the like.

When it is determined to be "Yes" in step 5, the process is executed again from step S1. When it is determined to be "No" in step S5, the almanac information comparison unit 50 acquires the almanac information stored in the analysis unit 20 and also acquires the almanac information from an electric communication line such as the Internet. The almanac information on the Internet is published by, for example, the U.S. Coast Guard Navigation Center. The almanac information comparison unit 50 compares the almanac information stored in the analysis unit and the almanac information obtained from the electric communication line (step S6).

Then, the almanac information comparison unit 50 determines whether the almanac information stored in the analysis unit is identical to the almanac information obtained from the electric communication line (step S7). It may be confirmed that all pieces of the almanac information are identical, or it may be confirmed that specific pieces of the almanac information are identical.

When the determination in step S7 is "Yes", the determination unit 70 turns off the contradiction flag 1 (step S8).

When the determination in step S7 is "No", the determination unit 70 turns on the contradiction flag 1 (step S9).

After step S8 or step S9 is executed, the visible satellite collation unit 60 compares the ID group of the positioning satellites used for the position analysis with the ID group of the visible satellites (step S10).

For example, the visible satellite collation unit 60 acquires the position information generated by the determination information generation unit 30. Further, the visible satellite collation unit 60 acquires almanac information from an electric communication line such as the Internet. The visible satellite collation unit 60 derives the ID group of visible satellites from the acquired position information and the acquired almanac information.

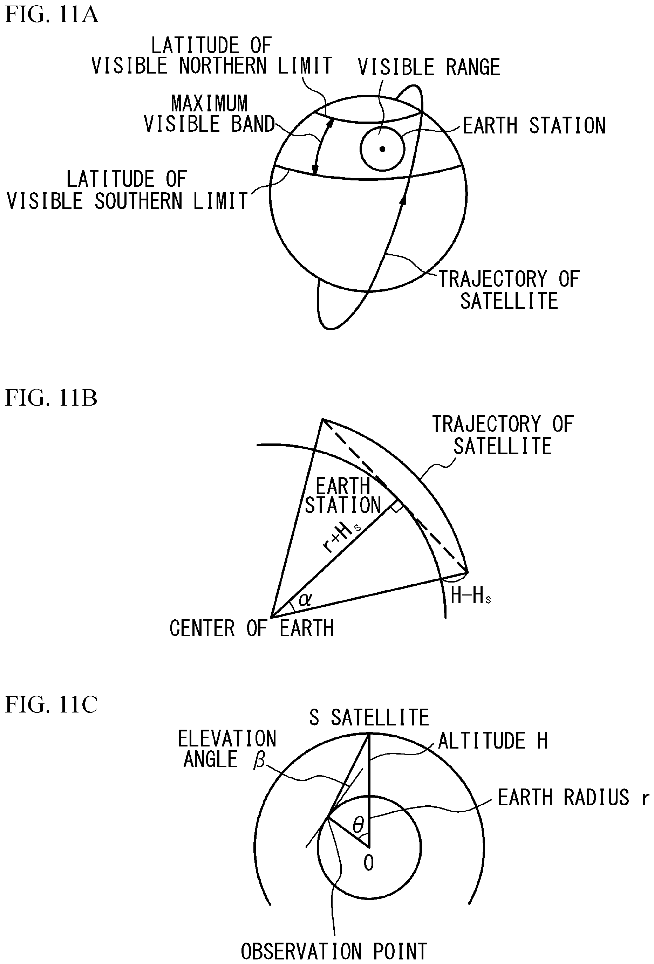

The visible satellite is a positioning satellite located at a range within which the visible satellite can be seen by the positioning device 100. The visible satellites can be obtained as illustrated in FIG. 11A to FIG. 11C. FIG. 11A illustrates a relationship between the maximum visible band and the visible range. FIG. 11B illustrates the visible range of the earth station when the elevation angle is 0°. In FIG. 11B, α is an angle representing the size of the visible range. H is the altitude of the positioning satellite. Hₛ is the ground level of the earth station. R is the radius of the earth. FIG. 11C illustrates a relationship among the altitude H of the satellite, the elevation angle β, and the central angle θ of the earth. As illustrated in FIG. 11A to FIG. 11C, the position of the positioning satellite is determined by performing orbit calculation at regular time intervals, and a visible satellite can be identified by obtaining the elevation angle from the earth station.

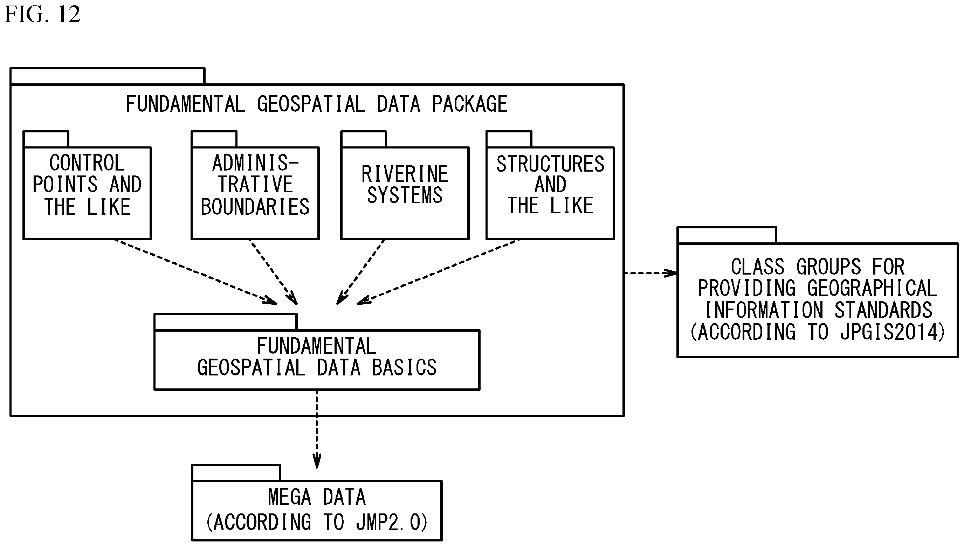

Depending on the terrain over which the receiver 104 is located, some visible satellites may not be visible. Thus, information on the terrain over which the receiver 104 is located (terrain information) may be reflected in the identification of visible satellites. The analysis unit 20 may store the terrain information in advance, or may acquire the terrain information via an electric communication line such as the Internet. FIG. 12 illustrates terrain information disclosed via an electric communication line. The terrain information is, for example, terrain information collected by the Geographical Survey Agency of the Ministry of Land, Infrastructure and Transportation through aerial laser surveying. The terrain information includes, for example, latitude, longitude, altitude, and the like calculated by laser beam, GNSS, IMU (inertial measurement unit), or the like.

Depending on the arrangement of buildings around the place where the receiver 104 is located, some visible satellites may not be visible. Therefore, information on buildings around the place where the receiver 104 is located (building information) may be reflected in the identification of visible satellites. The analysis unit 20 may store the building information in advance, or may acquire the building information via an electric communication line such as the Internet. The building information is, for example, building point data. The building information includes the height of the building and the like.

The determination unit 70 determines whether all of the ID groups of the positioning satellites are included in the ID group of the visible satellites generated in step S10 (step S11).

When the determination in step S11 is "Yes", the determination unit 70 turns off the contradiction flag 2 (step S12).

When the determination in step S11 is "No", the determination unit 70 turns on the contradiction flag 2 (step S13).

After the execution of step S12 or step S13, the determination unit 70 determines whether the contradiction flag 1 is off and the contradiction flag 2 is off (step S14).

When the determination in step S14 is "Yes", the determination unit 70 determines that the ranging signal is normal (the ranging signal is not a spoofing signal) (step S15). Thereafter, the process is executed again from step S1.

When the determination in step S14 is "No", the determination unit 70 determines that there is an attack (the ranging signal is a spoofing signal) (Step S16). Thereafter, the process is executed again from step S1.

When it is determined to be normal in step S13, the positioning unit 80 calculates the position of the positioning device 100 using the ranging signal. When it is determined in step S16 that there is an attack, the positioning unit 80 does not calculate the position using the ranging signal. Thus, when an attack is taking place, an operation such as electronic unlocking can be avoided.

In the present embodiment, it is possible to determine whether the multipath is occurring based on the information of the positioning satellite that have transmitted the ranging signal and the information about the transmission time of the ranging signal included in the received ranging signal. When it is determined that multipath is occurring, it can be determined that the ranging signal is not a spoofing signal. In such a configuration, since it is possible to detect the spoofing signal transmitted only for a moment, it is possible to prevent fraudulence even when the attack target is in a short distance from the attacker.

When all three positioning satellites are located near the zenith and there is no obstacle, there is a possibility that multipath does not occur. Therefore, it is preferable to determine that an attack has not been performed even when multipath has not occurred by performing determination using the contradiction flag 1 and the contradiction flag 2. In the above-described example, the identity of the almanac information and the identity of the visible satellite group are confirmed as an example, but it may be determined whether other criteria are satisfied.

In each of the above examples, the acquisition unit 10 is an example of an acquisition unit configured to acquire a ranging signal received by a receiver. The multipath analysis unit 40 is an example of a first determination unit configured to determine whether the ranging signal has been redundantly received based on information about a positioning satellite that has transmitted the ranging signal and information about transmission time of the ranging signal, which are included in the ranging signal. The determination unit 70 is an example of a second determination unit configured to determine that the ranging signal is a spoofing signal when the first determination unit determines that the ranging signal has been redundantly received. The almanac information comparison unit 50 and the visible satellite collation unit 60 are an example of a third determination unit configured to determine whether the ranging signal is a spoofing signal using a predetermined criterion.

Although the exemplary embodiments of the present invention have been illustrated in detail, the present invention is not limited to the above-mentioned embodiments, and other embodiments, variations and modifications may be made without departing from the scope of the present invention.

## Claims

1. A determination device comprising:
an acquisition unit (10) configured to acquire a ranging signal received by a receiver (104);
a first determination unit (40) configured to determine whether the ranging signal has been redundantly received based on information about a positioning satellite that has transmitted the ranging signal and information about a transmission time of the ranging signal, which are included in the ranging signal; and
a second determination unit (70) configured to determine that the ranging signal is a spoofing signal when the first determination unit (40) determines that the ranging signal has been redundantly received.

2. The determination device according to claim 1, wherein when the receiver (104) receives, with a time lag equal to or greater than a threshold value, two or more ranging signals in which the information about the positioning satellite and the information about the transmission time overlap between the two or more ranging signals, the first determination unit (40) determines that the ranging signal has been redundantly received.

3. The determination device according to claim 1 or 2, further comprising:
a third determination unit (50, 60) configured to determine whether the ranging signal is a spoofing signal using a predetermined criterion,
wherein the second determination unit (70) does not determine that the ranging signal is a spoofing signal when the third determination unit (50, 60) determines that the ranging signal is not a spoofing signal.

4. The determination device according to claim 3, wherein the third determination unit (50, 60) determines whether the ranging signal is a spoofing signal according to a result of collation between almanac information included in the ranging signal and almanac information acquired via an electric communication line.

5. The determination device according to claim 3, wherein the third determination unit (50, 60) determines whether the ranging signal is a spoofing signal according to a result of collation between identification information of a positioning satellite derived from information included in each ranging signal received by the receiver (104) and identification information of a visible satellite for the receiver derived from information including almanac information acquired via an electric communication line.

6. The determination device according to claim 5, wherein the third determination unit (50, 60) reflects terrain information, building information, or both the terrain information and the building information when deriving the identification information of the visible satellite for the receiver.

7. A determination method implemented by a computer, the determination method comprising:
acquiring a ranging signal received by a receiver;
determining whether the ranging signal has been redundantly received based on information about a positioning satellite that has transmitted the ranging signal and information about a transmission time of the ranging signal, which are included in the ranging signal; and
determining that the ranging signal is a spoofing signal when it is determined that the ranging signal has been redundantly received.

8. A determination program that causes a computer to execute a process, the process comprising:
acquiring a ranging signal received by a receiver;
determining whether the ranging signal has been redundantly received based on information about a positioning satellite that has transmitted the ranging signal and information about a transmission time of the ranging signal, which are included in the ranging signal; and
determining that the ranging signal is a spoofing signal when it is determined that the ranging signal has been redundantly received.
